# EUROPEAN PATENT APPLICATION

(11) **EP 2 983 393 A1**
(43) Date of publication of application: **10.02.2016**
(21) Application number: 14780101.3
(22) Date of filing: 07.04.2014
(51) Int. Cl.: H04W 16/32, H04W 76/00, H04W 24/10

(54) **METHOD FOR USER EQUIPMENT MANAGING CONNECTION WITH SMALL CELL IN HETEROGENEOUS CELL ENVIRONMENT**

(30) Priority: 05.04.2013 US 201361808638 P; 23.04.2013 US 201361815229 P
(71) Applicant: LG Electronics Inc., Seoul 07336 (KR)
(72) Inventor: CHOI, Hyeyoung, Seoul 137-893 (KR); CHUNG, Jaehoon, Seoul 137-893 (KR); BYUN, Ilmu, Seoul 137-893 (KR); LEE, Eunjong, Seoul 137-893 (KR); CHO, Heejeong, Seoul 137-893 (KR); HAHN, Genebeck, Seoul 137-893 (KR)
(74) Representative: Cabinet Plasseraud
(86) International application number: PCT/KR2014/002970
(87) International publication number: WO 2014/163448

(57) **Abstract**

Disclosed are a macro cell base station and a method for managing a connection with a small cell by: receiving a first measurement report message of the small cell from user equipment and deciding an activation of the connection with the small cell based on same; transmitting to the small cell a message indicating the activation of a connection with the user equipment, when the small cell has a different cell ID from a cell ID of the macro cell; receiving from the small cell a message for indicating scheduling for the user equipment; and indicating to the user equipment the connection with the small cell.

## Description

### [Technical Field]

The present invention relates to a method for managing connection between a user equipment (UE) and a small cell in a heterogeneous cell deployment in which a macro cell and a small cell coexist.

### [Background Art]

A radio access network (RAN) configuration has been changed such that various types of small cells such as a pico cell, a femto cell, etc. interact with a macro cell. The RAN configuration refers to a heterogeneous cell configuration or a hierarchical cell configuration in which small cells for low power/near field communication coexist in addition to an existing macro cell-based homogeneous network.

It is inefficient to additionally install a macro cell eNB in a complex urban environment like in a conventional art. This is because system throughput enhancement is not high compared with increase in costs and complexity for additional installment of macro cells due to shadow areas of a communication environment. Accordingly, in a new heterogeneous cell structure, a plurality of small cells coexists in a macro cell and serves corresponding UEs by resource allocation based on cell coordination. The heterogeneous cell structure is used to enhance quality of experience (QoE) by providing a high data transmission rate to a last user.

In small cell enhancements for E-UTRA and E-UTRAN study item (SI) as one of 3^{rd} generation partnership project (3GPP) standard scopes, research has been ongoing into enhancement of indoor/outdoor scenarios using low power nodes, and the scenarios is described in 3GPP TR 36.932. In small cell enhancements for E-UTRA and E-UTRAN SI, research has been conduced to draw advantages of concept of dual connectivity to small cell layers and a macro cell layer in which a user uses the same or different carriers.

### [Disclosure]

### [Technical Problem]

An object of the present invention devised to solve the problem lies in effectively managing connection between a small cell and a user equipment with dual connectivity in a heterogeneous cell deployment in which a macro cell and a small cell coexist.

Another object of the present invention devised to solve the problem lies in embodying a procedure for adding/activating/deactivating/releasing connection between a UE and a small cell such that a small cell using a separate scheduler from a macro cell supports the UE.

Another object of the present invention devised to solve the problem lies in managing connection between a UE and a small cell by various objects such as a UE, a macro cell, and a small cell.

It is to be understood that both the foregoing general description and the following detailed description of the present invention are exemplary and explanatory and are intended to provide further explanation of the invention as claimed.

### [Technical Solution]

The object of the present invention can be achieved by providing a method for managing connection between a macro cell and a small cell of a user equipment (UE) with dual connectivity in a heterogeneous cell deployment in which the macro cell and the small cell coexist, the method including receiving a first measurement report message about the small cell connected to the UE, from the UE, determining to activate connection with the small cell based on the first measurement report message, when the small cell has a different cell ID from a cell ID of the macro cell, transmitting a SCell activation indicator message for a command for activating connection with the UE, to the small cell, receiving a SCell activation response message for a command for scheduling the UE, from the small cell, and commanding the UE to activate connection with the small cell.

The method may further include, prior to the receiving of the first measurement report message from the UE, determining to add connection with the small cell to the UE based on a second measurement report message about the small cell, received from the UE, transmitting a dual connectivity information message including information about connection with the UE to the small cell, and upon receiving a dual connectivity response message for admitting that the UE is to be supported, from the small cell, transmitting a radio resource control (RRC) configuration message for a command for connection with the small cell to the UE.

The method may further include, after activating connection with the small cell, determining to deactivate connection with the small cell based on a third measurement report message about the activated small cell from the UE, transmitting a SCell deactivation indicator message for a command for deactivating connection with the UE to the small cell, and commanding the UE to deactivate connection with the small cell according to a SCell deactivation indicator message received from the small cell.

The method may further include, after deactivating connection with the small cell, activating connection between the UE and another small cell connected to the UE.

The method may further include, after activating connection with the small cell, determining to release connection with the small cell based on a fourth measurement report message about the activated small cell from the UE, transmitting a SCell release indicator message for a command of stopping scheduling for the UE to the small cell, and transmitting an RRC configuration message for a command for releasing connection with the small cell to the UE according to a SCell release response message received from the small cell.

The transmitting and the receiving may further include re-transmitting the SCell activation indicator message at predetermined intervals until a predetermined maximum transmission number of times is reached or the SCell activation response message is received from the small cell when the SCell activation response message is not received from the small cell for a predetermined time period.

The commanding may include transmitting a media access control (MAC) control element to the UE, and the SCell activation indicator message and the MAC control element may include information about a time point for activation of the small cell.

In another aspect of the present invention, provided herein is a macro cell base station (BS) for managing connection with a small cell of a user equipment (UE) with dual connectivity in a heterogeneous cell deployment in which a macro cell and a small cell coexist, the BS including a transmitter, a receiver, and a processor connected to the transmitter and the receiver and for managing connection with the small cell of the UE, wherein the processor is configured to control the receiver to receive a first measurement report message about the small cell connected to the UE, from the UE, to determine to activate connection with the small cell based on the first measurement report message, to control the transmitter to transmit a SCell activation indicator message for a command for activating connection with the UE, to the small cell when the small cell has a different cell ID from a cell ID of the macro cell, to control the receiver to receive a SCell activation response message for a command for scheduling the UE, from the small cell, and to command the UE to activate connection with the small cell.

### [Advantageous Effects]

The embodiments of the present invention may have the following advantageous effects.

First, connection between a small cell and a user equipment (UE) with dual connectivity in a heterogeneous cell deployment in which a macro cell and a small cell coexist.

Second, connection between a small cell and a user equipment (UE) may be managed in a heterogeneous cell deployment in which a macro cell and a small cell have different schedulers so as to prevent the case in which the UE is not scheduled or is unnecessarily and continuously scheduled.

Third, connection between a UE and a small cell may be managed by various objects so as to dynamically manage connection according to a communication deployment or system variation.

It will be appreciated by persons skilled in the art that that the effects that could be achieved with the present invention are not limited to what has been particularly described hereinabove and other advantages of the present invention will be more clearly understood from the following detailed description taken in conjunction with the accompanying drawings.

### [Description of Drawings]

The accompanying drawings, which are included to provide a further understanding of the invention, illustrate embodiments of the invention and together with the description serve to explain the principle of the invention.

In the drawings:
FIG. 1 illustrates a heterogeneous network wireless deployment according to the present invention;
FIG. 2 is a diagram illustrating carrier aggregation according to the present invention;
FIG. 3 is a diagram illustrating cross scheduling in the case of aggregation of a plurality of carriers according to the present invention;
FIG. 4 is a diagram for explanation of a MAC control element associated with the present invention;
FIG. 5 is a diagram for explanation of a handover procedure associated with the present invention;
FIG. 6 is a diagram for explanation of dual connectivity according to the present invention;
FIG. 7 is a diagram for explanation of a method for managing connection with a SCell according to an embodiment of the present invention;
FIG. 8 is a diagram for explanation of a method for managing connection with a SCell according to an embodiment of the present invention;
FIG. 9 is a diagram for explanation of a method for managing connection with a SCell according to an embodiment of the present invention;
FIG. 10 is a diagram for explanation of a method for managing connection with a SCell according to an embodiment of the present invention;
FIG. 11 is a diagram for explanation of a method for managing connection with a SCell according to an embodiment of the present invention;
FIG. 12 is a diagram for explanation of a method for managing connection with a SCell according to an embodiment of the present invention;
FIG. 13 is a diagram for explanation of a method for managing connection with a SCell according to an embodiment of the present invention;
FIG. 14 is a diagram for explanation of a method for managing connection with a SCell according to an embodiment of the present invention;
FIG. 15 is a diagram for explanation of a method for managing connection with a SCell according to an embodiment of the present invention;
FIG. 16 is a diagram for explanation of a method for managing connection with a SCell according to an embodiment of the present invention; and
FIG. 17 is a block diagram of a structure of a UE and an eNB according to an embodiment of the present invention.

### [Best Mode]

Most of the terms used herein are general terms that have been widely used in the technical art to which the present invention pertains. However, some of the terms used herein may be created reflecting intentions of technicians in this art, precedents, or new technologies. Also, some of the terms used herein may be arbitrarily chosen by the present applicant. In this case, these terms are defined in detail below. Accordingly, the specific terms used herein should be understood based on the unique meanings thereof and the whole context of the present invention.

Embodiments described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment.

In the description of the drawings, procedures or steps which render the scope of the present invention unnecessarily ambiguous will be omitted and procedures or steps which can be understood by those skilled in the art will be omitted.

In the disclosure, 'include' or 'comprise' should be interpreted as that other components may further be included, not excluded, unless otherwise specified. The term '- unit', '-or(er)', 'module', etc. signifies at least one function or operation processing unit that can be implemented in hardware, software, or a combination thereof. In addition, it is to be understood that the singular forms 'a, 'an', and 'the' include plural referents unless the context clearly dictates otherwise.

In the embodiments of the present invention, a description is made, centering on a data transmission and reception relationship between an eNB and a user equipment (UE). The eNB is a terminal node of a network, which communicates directly with a UE. In some cases, a specific operation described as performed by the eNB may be performed by an upper node of the BS.

Namely, it is apparent that, in a network comprised of a plurality of network nodes including an eNB, various operations performed for communication with a UE may be performed by the eNB, or network nodes other than the eNB. The term 'base station (BS)' may be replaced with the term 'fixed station', 'Node B', 'evolved Node B (eNode B or eNB)', an advanced base station (ABS), or an access point, etc.

In addition, the term 'mobile station (MS)' may be replaced with the term 'user equipment (UE)', 'subscriber station (SS)', 'mobile subscriber station (MSS)', 'mobile terminal', 'advanced mobile station (AMS), 'terminal', etc.

A transmitter refers to a fixed node and/or a mobile node for transmitting a data or voice service, and a receiver refers to a fixed node and/or a mobile node for receiving a data or voice service. Accordingly, in uplink, an MS becomes a transmitter and a base station becomes a receiver. Similarly, in downlink, an MS becomes a receiver and a base station becomes a transmitter.

In addition, the expression that a device communicates with a 'cell' means that the device transmits and receives signals to and from an eNB of the corresponding cell. That is, an actual object to and from which the device transmits and receives signals may be a specific eNB. However, for convenience of description, the device transmits and receives signals to and from a cell formed by the specific cell. Similarly, the terms 'macro cell' and/or 'small cell' may refer to corresponding specific coverage and also refer to 'an eNB for supporting a macro cell' and/or 'a small cell eNB for supporting a small cell'.

The embodiments of the present invention are supported by standard documents disclosed in at least one of the Institute of Electrical and Electronic Engineers (IEEE) 802.xx system, the 3^{rd} generation partnership project (3GPP) system, the 3GPP long term evolution (LTE) system and the 3GPP2 system, all of which are wireless access systems. That is, the steps or the portions of the embodiments of the present invention which are not described in order to clarify the technical spirit are supported by the above-described documents.

All the terms disclosed in the present specification may be described by the above-described standard documents. In particular, embodiments of the present invention can be supported by one or more of P802.16e-2004, P802.16e-2005, P802.16.1, P802.16p, and P802.16.1b standard documents that are standard documents of the IEEE 802.16 system.

Hereinafter, preferred embodiments of the present invention will be described with reference to the accompanying drawings. It is to be understood that the detailed description which will be disclosed along with the accompanying drawings is intended to describe the exemplary embodiments of the present invention, and is not intended to describe a unique embodiment through which the present invention can be carried out.

The specific terms used in the following description are provided in order to facilitate the understanding of the present invention and may be changed in other forms without departing from the technical scope of the present invention.

### 1. Heterogeneous network deployment

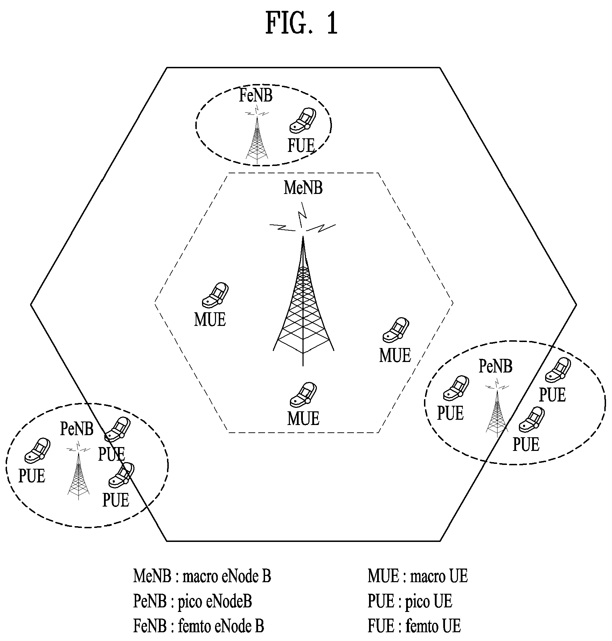

FIG. 1 illustrates a heterogeneous network wireless deployment according to the present invention.

To guarantee a more stable data service such as multimedia service in future-generation mobile communication, much attention has been attracted to a hierarchical cell structure or heterogeneous cell structure in which micro cells (pico cells or femto cells) are co-located within a macro cell-based homogeneous network. This is because installation of additional macro eNode Bs is inefficient in terms of cost and complexity relative to system performance improvement.

A heterogeneous network configuration under consideration for a future-generation communication network may be formed as illustrated in FIG. 1. A plurality of small cells may coexist in one macro cell and each serve corresponding UEs by resource allocation based on cell coordination.

The above small cells are categorized into two types depending on their access schemes of UEs. First, small cells using open access subscriber group (OSG) or non closed subscriber group (Non-CSG) scheme are accessible to UEs connected to a macro cell and/or UEs connected to other small cells. The OSG or Non-CSG scheme enables handover to the small cells from other cells.

Second, small cells using a closed subscriber group (CSG) scheme are not accessible to unauthorized UEs connected to a macro cell and/or unauthorized UEs connected to other small cells. In addition, the CSG scheme does not allow handover to the small cells from other cells.

### 2. Carrier aggregation and dual connectivity

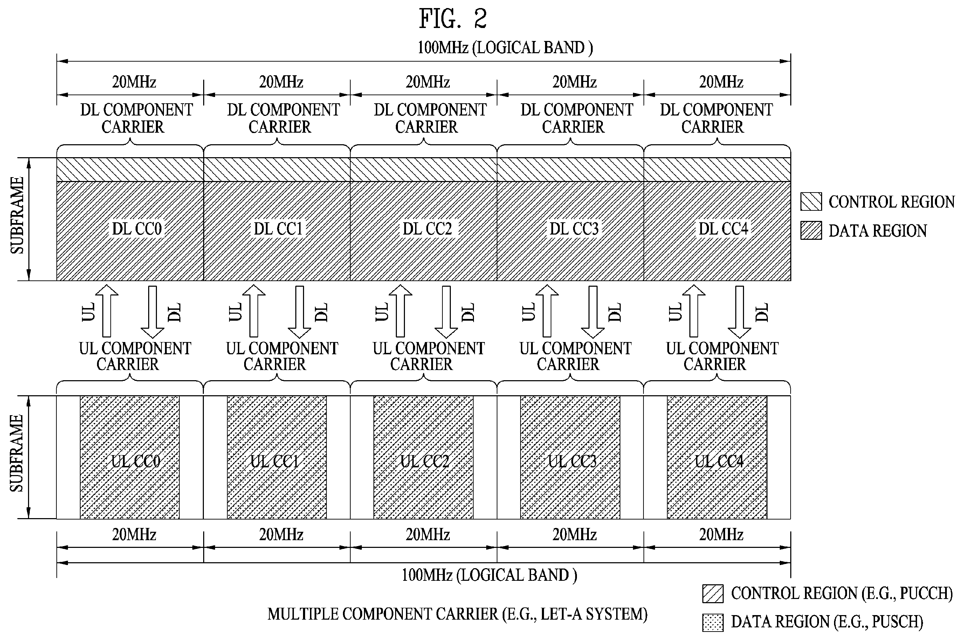

FIG. 2 is a diagram illustrating carrier aggregation according to the present invention.

Referring to FIG. 2, a communication system may collect a plurality of uplink/downlink component carriers (CCs) to support wider uplink/downlink bandwidths. The term "CC" may be replaced with other equivalent terms (e.g., a carrier, a cell, etc.). CCs may or may not be adjacent to each other in the frequency domain. A bandwidth of CCs may be independently determined. Asymmetrical carrier aggregation with UL CCs and DL CCs, the numbers of which are different, is possible. Control information may be configured to be transmitted and received through a specific CC. The specific CC may be referred to as a primary CC (or an anchor CC) and the remaining CCs may be referred to as a secondary CC.

When cross-carrier scheduling (or cross-CC scheduling) is applied, PDCCH for downlink allocation may be transmitted to DL CC#0, and the corresponding PDSCH may be transmitted to DL CC#2. Moreover, for cross-CC scheduling of LTE-advanced (LTE-A) UEs, the introduction of carrier indicator field (CIF) has been considered. Configuration for the presence or absence of the CIF within PDCCH is semi-statically and UE-specifically (UE-group-specifically) enabled by higher layer signaling (e.g., RRC signaling). The baseline of PDCCH transmission is summarized as below.
1) CIF disabled: PDCCH on a DL CC assigns PDSCH resources on the same DL CC or PUSCH resources on a single linked UL CC
   1-1) No CIF
   1-2) The same as Rel-8 PDCCH structure (the same coding and the same CCE-based resource mapping) and DCI formats
2) CIF enabled: PDCCH on a DL CC can assign PDSCH or PUSCH resources in one of multiple aggregated DL/UL CCs using the CIF
   2-1) LTE DCI format extended with the CIF
      2-1-1) CIF (if configured) is a fixed x-bit field (e.g., x=3)
      2-1-2) CIF (if configured) location is fixed irrespective of DCI format size
   2-2) Reusing LTE PDCCH structure (the same coding and the same CCE-based resource mapping)

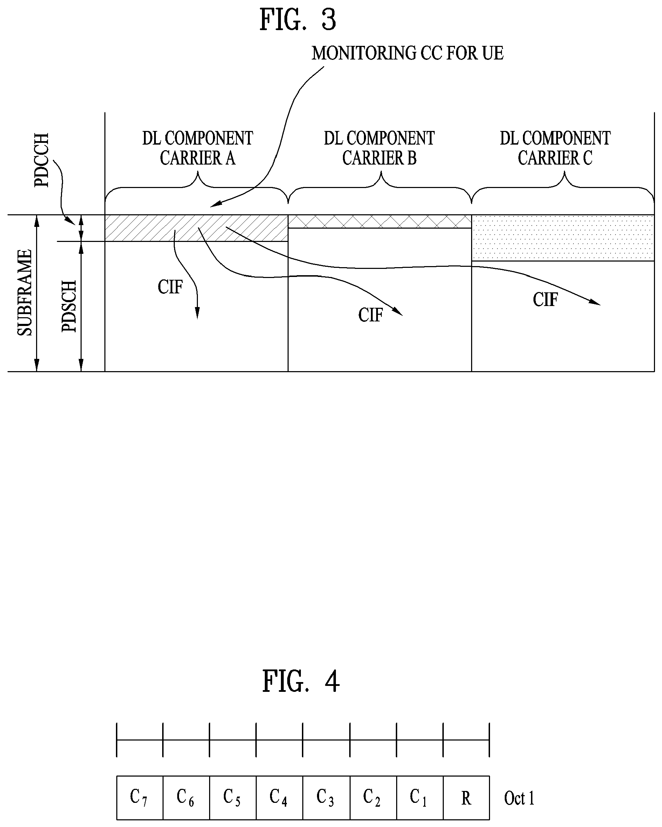

FIG. 3 is a diagram illustrating cross scheduling in the case of aggregation of a plurality of carriers according to the present invention.

In the case of presence of CIF, the eNB may assign the PDCCH monitoring DL CC set for reduction of blind decoding complexity at the UE side. The PDCCH monitoring DL CC set is a portion of the entire aggregated DL CCs and includes one or more DL CC, and the UE only performs detection/decoding of PDCCHs on the corresponding DL CC. In other words, upon scheduling PDSCH/PUSCH for a UE, the eNB transmits PDCCHs only through the PDCCH monitoring DL CC set. The PDCCH monitoring DL CC set may be set UE-specifically, UE-group-specifically, or cell-specifically. The term "PDCCH monitoring DL CC" may be replaced with the equivalent terms such as a monitoring carrier, a monitoring cell, etc. In addition, CCs aggregated for the UE may be replaced with the equivalent terms such as a serving CC, a serving carrier, a serving cell, etc.

As illustrated in FIG. 3, three DL CCs may be aggregated. In FIG. 3, DL CC A is configured as the PDCCH monitoring DL CC. DL CC A, B, and C may each be referred to as a serving CC, a serving carrier, a serving cell, etc. When the CIF is disabled, each DL CC can transmit only the PDCCH scheduling its own PDSCH without the CIF according to LTE PDCCH configuration. On the other hand, when the CIF is enabled by UE-specific (or UE-group-specific or cell-specific) higher layer signaling, only DL CC A (monitoring DL CC) can transmit the PDCCHs scheduling not only its own PDSCH but also PDSCHs of the other CCs using the CIF. In this case, no PDCCH is transmitted on DL CC B and C which are not configured as the PDCCH monitoring DL CC. Accordingly, DL CC A (monitoring DL CC) needs to include all of a PDCCH search range associated with DL CC A, a PDCCH search range associated with DL CC B, and a PDCCH search range associated with DL CC C. In this specification, it is assumed that the PDCCH search ranges are defined for the respective carriers.

As described above, LTE-A has considered the introduction of CIF for cross-CC scheduling. Whether the CIF is used (that is, whether a cross-CC scheduling mode or a non-cross-CC scheduling mode is supported) and conversion between modes may be configured via RRC signaling semi- statically/UE-specifically. The UE may perform the RRC signaling and then check whether the CIF is used in PDCCH scheduled to the UE.

FIG. 4 is a diagram for explanation of a MAC control element associated with the present invention. The MAC control element that activates/deactivates a cell is identified by a subheader of a MAC PDU. As illustrated in FIG. 4, the MAC control element may include a single octet containing 7 C-fields and one R-field and have a fixed size.

The C-field indicates that a small cell indicated by the corresponding field needs to be activated/deactivated. When a value of the C-field is '1', the field may indicate that the small cell shall be activated, and when the value of the C-field is '0', the field may indicate that the small cell shall be deactivated. The R-field may be set to '0' as a reserved bit.

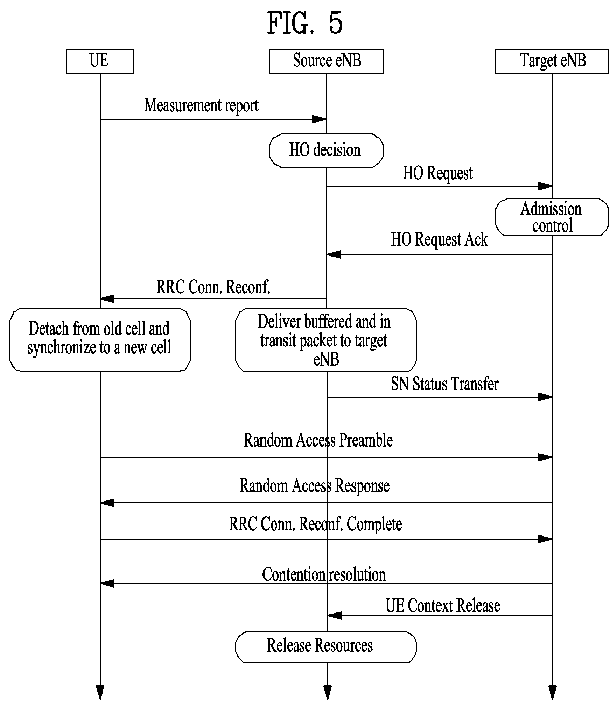

FIG. 5 is a diagram for explanation of a handover procedure associated with the present invention.

A UE may change connection with an eNB from one eNB to another eNB via a handover procedure. The connected eNB may be referred to as a source eNB, and a newly connected target eNB may be referred to as a target eNB.

The UE may communicate with the source eNB to transmit a measurement report message about a communication state with the source eNB. The source eNB may determine handover of the UE and request connection with the UE to the target eNB. When the target eNB transmits an acknowledgement (ACK) message according to handover admission of the target eNB, the source eNB may transmit an RRC connection reconfiguration message to the UE to command the UE to be connected to the target eNB.

Then, the UE may release connection with the source eNB and perform synchronization with the target eNB. The source eNB may forward a packet and so on, which have been subject to communication with the UE, to the target eNB such that the target eNB continuously communicates with the UE. The source eNB may transmit a serial number (SN) status along with the packet to the target eNB.

The UE may perform a random access procedure in order to establish new connection with the target eNB. When the UE is successfully connected to the target eNB via a contention resolution procedure, the target eNB may command the source eNB to release connection with the UE. The source eNB may release connection with the UE to re-ensure a resource allocated to the UE.

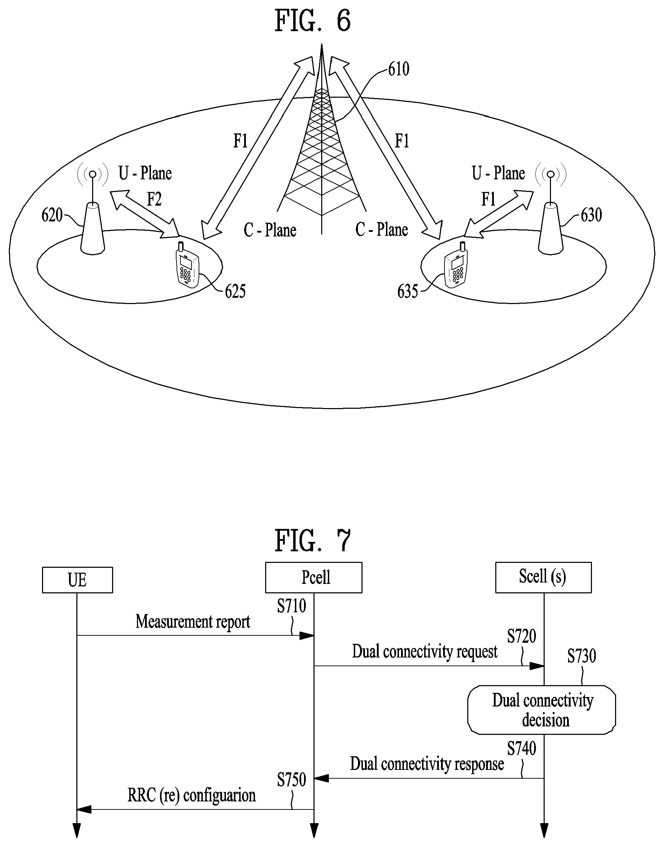

FIG. 6 is a diagram for explanation of dual connectivity according to the present invention.

UEs 625 and 635 within the coverage of first and second small-cell eNBs 620 and 630 may be connected simultaneously to a small cell and a macro cell by a macro-cell eNB 610. The UEs 625 and 635 may receive a service from a macro cell or a small cell simultaneously or in a time division multiplying (TDM) scheme. Backhaul between the macro cell and the small cell may be ideal backhaul or non-ideal backhaul.

The UEs 625 and 635 may receive a service of control plane (C-plane) functionalities (connection management and mobility) through a macro cell layer. In addition, the UEs 625 and 635 may select user plane (U-plane) functionalities from the macro cell and/or the small cell and receive a service of the U-plane functionalities. FIG. 6 illustrates an embodiment in which a small cell is a data path of the U-plane.

For example, data may be transmitted in real time by a service such as voice over long term evolution (VoLTE). When the UEs 625 and 635 moves and receives from the VoLTE service from a small cell, interruption of the service may occur frequently. Thus, the UEs 625 and 635 may receive a service from a macro cell in which continuity is ensured relative to a small cell. On the other hand, the UEs 625 and 635 may receive a service that requires high efficiency from a small cell.

The macro cell and the small cell may perform carrier aggregation. That is, the macro cell and the small cell may user the respective random n and k (n and k are natural numbers) carriers. In this case, carriers of the macro cell and small cell may be different or some carriers may be commonly used by the macro cell and small cell. For example, the macro cell may use subcarriers with frequencies f1 and f2 and the small cell may use subcarriers with frequencies f2 and f3.

Referring to FIG. 6, the macro-cell eNB 610 and the first small-cell eNB 620 may uses subcarriers with different frequencies F1 and F2. On the other hand, the macro-cell eNB 610 and the second small-cell eNB 630 may use the same frequency band F1 in order to provide a service to the UEs 625 and 635. The UEs 625 and 635 configured to have dual connectivity may be simultaneously connected to both a macro cell by the macro-cell eNB 610 and a small cell by the small-cell eNBs 620 and 630.

A detailed description will be given in such a way that the aforementioned dual connectivity is similar to inter-site (or inter-band) carrier aggregation for aggregating carriers in different bands. That is, the detailed description will be given in such a way that a macro cell is a primary cell (PCell) by a primary CCE in carrier aggregation and a small cell is a secondary cell (SCell) by a secondary CC in carrier aggregation.

However, dual connectivity in a heterogeneous network deployment needs to be distinguished from carrier aggregation. That is, dual connectivity between a macro cell and a small cell is interpreted as adding geographical/positional concept, but not carrier aggregation in a single eNB. In more detail, when the UEs 625 and 635 are positioned in a small cell by the first small-cell eNB 620 or positioned in a small cell by the second small-cell eNB 630, the UEs 625 and 635 may simultaneously communicate with the first and second small-cell eNBs 620 and 630 that are geographically/positionally separated while receiving a service from the macro-cell eNB 610.

### 3. Method for managing connection with SCell

The legacy LTE (Rel-8/9) and LTE-A considers carrier aggregation in order to configure PCell and SCell(s) for one UE by an eNB. The PCell and SCell configured to the UE via carrier aggregation are scheduled by the same scheduler.

However, when a UE has dual connectivity in the aforementioned heterogeneous network deployment (that is, when the UE is simultaneously connected to both a macro cell and a small cell), the UE may be independently scheduled with respect to the macro cell and the small cell from separate schedulers. That is, the UE may be scheduled with the PCell from the macro cell and scheduled with the SCell from the small cell.

When separate schedulers respectively perform scheduling on UEs with dual connectivity, if they do not share scheduling information, unpredicted problems may occur. Hereinafter, a method for overcoming problems that arise when a UE with dual connectivity is independently scheduled by a separate scheduler will be proposed.

Hereinafter, independent scheduling of a separate scheduler does not indicate that cross scheduling is excluded in carrier aggregation. That is, when cross scheduling is not applied, a macro cell and a small cell can independently schedule their own resources. On the other hand, when cross scheduling is applied, each scheduler may perform scheduling by exchanging data, scheduling associated resource information, channel state information (CSI) of a channel, and so on between the macro cell and the small cell.

The UE having dual connectivity may be allocated resources from different network points (e.g., a master eNB and a secondary eNB) connected via non-ideal backhaul. In this case, the master eNB (MeNB) may function as a mobility anchor to an eNB corresponding to S1-MME connection from a core network (CN) in dual connectivity. A group of serving cells associated with the master eNB may be defined as a master cell group. A secondary eNB (SeNB) is an eNB for providing additional resources for a UE and may be defined to be distinguished from a master eNB (i.e., the SeNB may be defined as an eNB that is not the master eNB). In addition, similarly to a master cell group, a group of serving cells associated with the SeNB may be defined as a secondary cell group.

In this specification, the UE having dual connectivity may receive a service from a PCell via connection with a macro cell and may receive a service from a SCell via connection with a small cell. That is, in this specification, an operation performed on the "PCell" may refer to an operation performed on a "macro cell" that serves the PCell, and an operation performed on the "SCell" may refer to an operation performed on a "small cell" that serves the SCell.

However, the terms are selected for convenience of description only. That is, terms "PCell" and "SCell" may be interpreted as various meanings according to a cell type and are not limited to the aforementioned meanings. For example, the "PCell" and the "SCell" may refer to a macro cell and a small cell, respectively and also refer to the "master eNB)" and the "secondary eNB", respectively. In addition, the "PCell" and the "SCell" may refer to the "master cell group" associated with the MeNB and the "secondary cell group" associated with the SeNB, respectively.

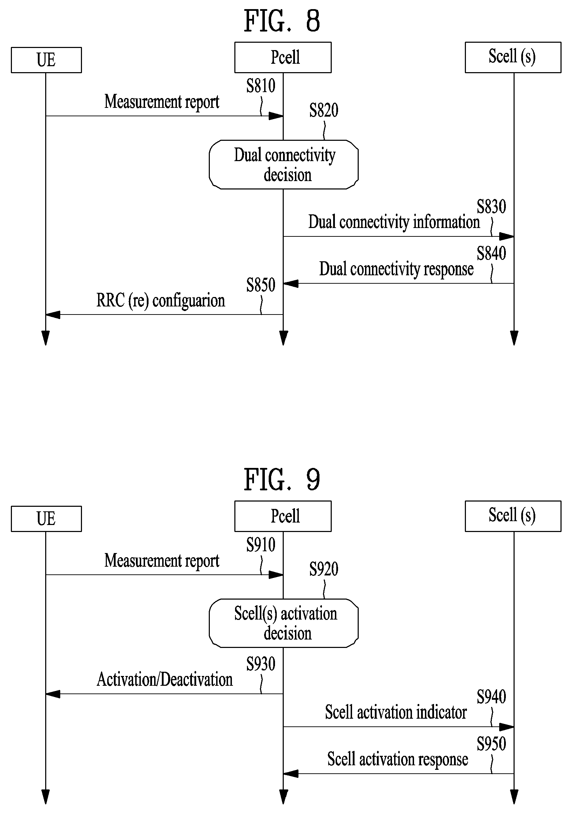

FIGs. 7 and 8 are diagrams for explanation of a method for managing connection with a SCell according to an embodiment of the present invention. FIG. 7 illustrates an embodiment in which the SCell determines whether dual connectivity of a UE is supported, and FIG. 8 illustrates an embodiment in which the PCell determines whether dual connectivity of the SCell with respect to a UE is supported.

FIG. 7 will be described. A UE with dual connectivity of a macro cell PCell and a small cell SCell may generate a measurement report message based on a DL signal from the PCell. The measurement report message may include at least one of a measurement value of intensity, quality, SNR, and SINR of a signal from the PCell. The UE may transmit the generated measurement report message to the PCell (i.e., a macro cell) (S710).

When the measurement value included in the measurement report message from the UE triggers a preset event (e.g., when intensity of a signal from a neighbor cell adjacent to the UE is equal to or greater than a threshold value, when a difference between intensity of the signal from the neighbor cell and the PCell as a serving cell is less than a threshold value, or the SNR from the PCell is less than a threshold value), the PCell may transmit a dual connectivity request message to the SCell (S720).

The dual connectivity request message may be a message for requesting the SCell to support dual connectivity for the UE and may be a message for requesting the SCell (i.e., a small cell) to serve the UE. The dual connectivity request message may include "a message type, a physical cell identifier (PCID), an E-UTRAN cell global identifier (ECGI) or a global cell identifier (GCID) of the PCell, a PCID, ECGI or GCID of the SCell, context information of the UE, channel state information (CSI) or the SCell, which is measured and reported by the UE, an ID (cell-radio network temporary identifier (C-RNTI) or UE X2AP ID) of the UE I the PCell, and information about dedicated preamble when the UE performs non-contention based random access on the SCell", and so on and may be transmitted through backhaul (e.g., an X2 interface or an air interface) between the PCell and the SCell.

The SCell that receives the dual connectivity request message may determine whether the UE is supported using cell load of the SCell, context information of the UE, and information of an ID of the UE in the PCell (S730).

The SCell that determines to support the UE may transmit a dual connectivity response message to the PCell (S740). The dual connectivity response message may include "a message type, an ID (PCID, ECGI, or GCID) of the PCell, an ID (PCID, ECGI, or GCID) of the SCell, and an ID (C-RNTI or UE X2AP ID) of the UE in the SCell" and so on and may be transmitted through backhaul between the PCell and the SCell.

The PCell that receives the dual connectivity response message may transmit a RRC (re)configuration message to the UE to establish connection with the SCell to the UE (S750). In this case, the RRC (re)configuration message may include "a message type, an ID (PCID, ECGI, or GCID) of the SCell, a UL/DL frequency of the SCell, SCellindex, and C-RNTI of the UE in the SCell" and so on.

When the SCell cannot support dual connectivity of the UE, the SCell may transmit a SCell configuration failure message or a dual connectivity failure message to the PCell. Such message may include "a message type, an ID (PCID, ECGI, or GCID) of the PCell, an ID (PCID, ECGI, or GCID) of the SCell, and Cause" and so on. The field "Cause" may include information about reason why the SCell cannot support dual connectivity.

The PCell may set a timer corresponding to a preset time period along with transmission of the dual connectivity request message. Accordingly, when the PCell does not receive a dual connectivity response/failure message from the SCell that transmits the dual connectivity request message even after the timer expires, the PCell may re-transmit a dual connectivity request message to the SCell. In this case, the PCell may pre-define a maximum number of times for repeatedly re-transmitting the dual connectivity request message until the dual connectivity response/failure message is received from the SCell.

The UE that receives the RRC (re)configuration message from the PCell may recognize that the PCell configures a specific SCell for the UE. In addition, the UE may recognize that connection with the SCell is added in a deactivation status. When connection with the SCell is in a deactivation status, the UE may not report CSI for the SCell and may not monitor a PDCCH. In addition, the UE may not transmit a random access channel (RACH), a sounding reference signal (SRS), a UL-shared channel (UL-SCH), and so on to the SCell.

Hereinafter, FIG. 8 will be described. When the UE previously knows information about a cell load and so on of the PCell and the SCell, a procedure for transmitting and receiving the dual connectivity request/response/failure message, which has been described with reference to FIG. 7, may be omitted.

The PCell may receive a measurement report message from the UE (S810), and when a measurement value of the measurement report message satisfies a condition for triggering a preset event, the PCell may determine that the SCell supports dual connectivity of the UE (S820). That is, the PCell may determine the SCell to be connected to the UE and to provide a service to the UE.

Then the PCell may transmit a dual connectivity information message including information items required to support the UE by the SCell to the SCell (S830). The dual connectivity information message may include "a message type, an ID (PCID, ECGI, or GCID) of the PCell, an ID (PCID, ECGI, or GCID) of the SCell, context associated information of the UE, a measurement and report value of the UE, an ID (C-RNTI or UE X2AP ID) of the UE in the PCell, CSI of the SCell, measured and reported by the UE, and information about a dedicated preamble when the UE performs an non-contention-based random access on the SCell" and so on and may be transmitted through backhaul between the PCell and the SCell.

The SCell that receives the dual connectivity information message may transmit a dual connectivity response message to the PCell when the SCell can support the UE (S840). The dual connectivity response message may be embodied similarly to the description of FIG. 7.

The PCell may set a timer corresponding to a preset time period along with transmission of the dual connectivity request message. Accordingly, when the PCell does not receive a dual connectivity response message from the SCell that transmits the dual connectivity information message even after the timer expires, the PCell may re-transmit a dual connectivity information message to the SCell. In this case, the PCell may pre-define a maximum number of times for repeatedly re-transmitting the dual connectivity information message until the dual connectivity response message is received from the SCell.

Upon receiving a response message indicating that the SCell supports dual connectivity of the UE from the SCell, the PCell may transmit an RRC (re)configuration message to the UE (S850). The PCell may indicate that the SCell supports dual connectivity of the UE through the RRC (re)configuration message and add connection with the SCell to the UE. The RRC (re)configuration message may include "a message type, an ID (PCID, ECGI, or GCID) of the SCell, a UL/DL frequency of the SCell, SCellindex, and C-RNTI of the UE in the SCell" and so on.

When the UE uses different C-RNTIs in the PCell and the SCell, the PCell and the SCell may recognize C-RNTIs allocated to the UE in respective cells with respect to each other during transmission and reception of a message in operations S830 and S840. On the other hand, when the UE are allocated with the same C-RNTI in the PCell and the SCell and uses the C-RNTI, information about C-RNTI of the UE may be omitted from the aforementioned RRC (re)configuration message.

The UE that receives the RRC (re)configuration message from the PCell may recognize that the PCell configures a specific SCell for the UE. In addition, the UE may recognize that connection with the SCell is added in a deactivation status. When connection with the SCell is in a deactivation status, the UE may not report CSI for the SCell and may not monitor a PDCCH. In addition, the UE may not transmit a random access channel (RACH), a sounding reference signal (SRS), a UL-shared channel (UL-SCH), and so on to the SCell.

FIG. 9 is a diagram for explanation of a method for managing connection with a SCell according to an embodiment of the present invention.

In the legacy LTE Rel-8/9/10, a Pcell may activate connection with the SCell in a deactivation status among SCells configured in the UE. The PCell may transmit a message including a MAC control element to the UE to activate connection with the SCell, and the UE that receives the MAC control element may measure connection with the activated SCell. The PCell activates connection with the SCell in order to allow the UE to use a resource of the SCell, which is configured for the UE, thereby enhance a data rate of the UE.

With regard to a UE with dual connectivity for a macro cell and a small cell, as described above, the PCell and the SCell may be configured in different eNBs. In this case, when the PCell activates connection with the SCell configured for an arbitrary UE, there is a problem in that the UE can measure connection with the activated SCell but cannot be actually scheduled by the corresponding SCell. Hereinafter, a method for overcoming the problem will be described.

First, the UE may measure connection with the SCell based on DL signal intensity from the SCell added by the PCell. Even if the UE does not monitor the deactivated SCell or does not transmit a UL message, the UE may transmit a measurement report message of a DL signal from the SCell to the PCell like in S710 of FIG. 7 and S810 of FIG. 8 (S910).

Then the PCell may determine whether connection with the SCell added in a deactivation status for the UE is activated (S920). The PCell may determine whether connection with the SCell is activated, based on a measurement value of the measurement report message received from the UE. Alternatively, even if S910 is not performed (i.e., even if the measurement report message is not received from the UE), the PCell may determine whether connection with the SCell is activated when a predetermined time elapses after connection with the SCell is added to the UE.

Upon determining that connection with the SCell added to the UE is activated, the PCell may command the UE to activate connection with the SCell (S930). The PCell may transmit a MAC control element to the UE to command the UE to activate connection with the SCell added in a deactivation status. The UE that receives a message for activation of the SCell from the PCell may monitor a control channel (e.g., PDCCH) from the SCell and measure and report CSI of the SCell to the PCell. In addition, the UE may transmit RACH, SRS, UL-SCH, and so on to the SCell.

The PCell may compare a PCID (Global eNB ID, eNB ID, or ECGI) of the SCell with a PCID (Global eNB ID, eNB ID, or ECGI) of the PCell, based on the measurement value of the measurement report message received from the UE. When the PCIDs (Global eNB IDs, eNB IDs, or ECGIs) of the SCell and the PCell are different, that is, when the PCell recognizes that the SCell is a different network point from the PCell, the PCell may transmit a SCell activation indicator message to the SCell (S940). The SCell activation indicator message may include "a message type, an ID (PCID, ECGI, or GCID) of the PCell, an ID (PCID, ECGI, or GCID) of the SCell, an ID (C-RNTI or UE X2AP ID) of the UE in the PCell (or SCell), CSI measured and reported by the UE, and SCellindex" and so on and may be transmitted through backhaul between the PCell and the SCell.

The SCell that receives the SCell activation indicator message may recognize that connection with the UE is activated and may perform scheduling for the UE. In addition, the SCell that receives the SCell activation indicator message may transmit a SCell activation response message to the PCell in response to the SCell activation indicator message (S950). When two or more SCells receive the SCell activation indicator message from the PCell, some or all of the SCells that receives the corresponding message, which can allocate a resource to the UE and can perform scheduling, may transmit the SCell activation response message to the PCell. The SCell activation response message may include "a message type, an ID (PCID, ECGI, or GCID) of the PCell, an ID (PCID, ECGI, or GCID) of the SCell, an ID (C-RNTI or UE X2AP ID) of the UE in the PCell, and SCellindex" and so on.

On the other hand, when the SCell that receives the SCell activation indicator message cannot activate connection with the UE to allocate a resource to the UE or to schedule the UE, the SCell may transmit a SCell activation failure message to the PCell. The SCell activation failure message may include "a message type, an ID (PCID, ECGI, or GCID) of the PCell, an ID (PCID, ECGI, or GCID) of the SCell, an ID (C-RNTI or UE X2AP ID) of the UE in the PCell, SCellindex, and Cause" and so on, and the field "Cause" may include information about reason why the SCell cannot activate connection with the UE.

The PCell may set a timer corresponding to a preset time period along with transmission of the SCell activation indicator message. Accordingly, when the PCell does not receive a SCell activation response message from the SCell even after the timer expires, the PCell may re-transmit a SCell activation indicator message to the SCell. In this case, the PCell may pre-define a maximum number of times for repeatedly re-transmitting the SCell activation indicator message until the SCell activation response message is received from the SCell.

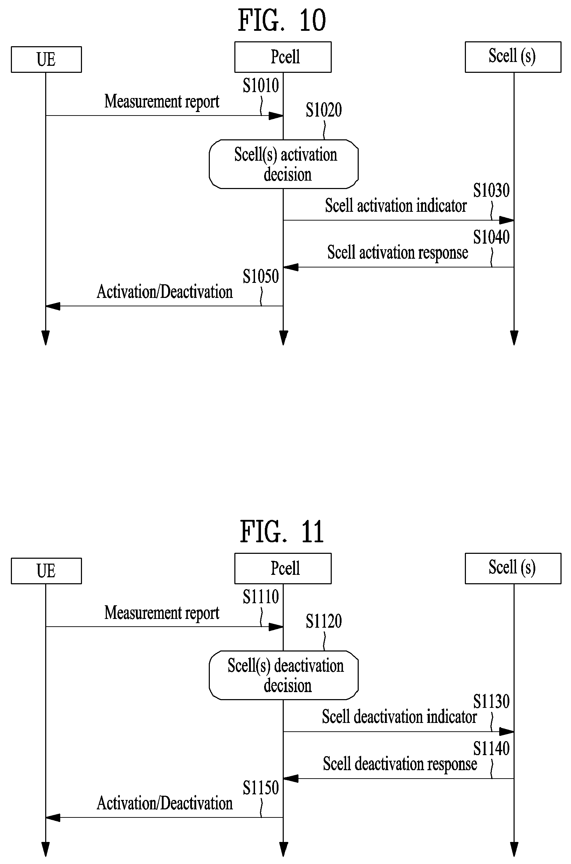

FIG. 10 is a diagram for explanation of a method for managing connection with a SCell according to an embodiment of the present invention. In FIG. 10, repeated descriptions of elements already described in FIG. 9 will not be given here.

In the embodiment described with reference to FIG. 9, after the UE receives a command for activating connection with the SCell from the PCell, the PCell transmits the SCell activation indicator message to the SCell. Accordingly, the SCell activated for the UE by the PCell may not actually support the UE. That is, the SCell needs to receive the SCell activation indicator message from the PCell before the UE monitors the SCell or transmits a UL signal.

To overcome this problem, in the embodiment illustrated in FIG. 10, a PCell may determine whether connection with a SCell is activated (S1020) and then transmits a SCell activation indicator message to a SCell with a different PCID from the PCell (S1030). Then the SCell may transmit a SCell activation response/failure message to the PCell (S1040). After receiving the SCell activation response message from the SCell, the PCell may transmit a MAC control element to the UE to activate connection with the SCell (S1050).

In addition, in order to avoid errors due to a difference between a time point when the SCell is actually activated and a time point when the UE recognizes an activation time point of the SCell, the PCell may add information associated with the activation time point of the SCell to the MAC control element transmitted to the UE and the SCell activation indicator message transmitted to the SCell and may transmit the information.

FIG. 11 is a diagram for explanation of a method for managing connection with a SCell according to an embodiment of the present invention.

In the legacy LTE Rel-8/9/10, a PCell may transmit a MAC control element to a UE to deactivate connection with the SCell in an activation state. For example, when the UE transmits a measurement report message of the SCell to the PCell, the PCell may deactivate connection with the SCell when the measurement result satisfies a preset condition. For example, the PCell may deactivate connection with the SCell configured for the UE when intensity of a signal from the SCell is less than a threshold value.

With regard to a UE with dual connectivity for a macro cell and a small cell, as described above, the PCell and the SCell may be configured in different eNBs. In this case, when the PCell deactivates connection with the SCell configured for an arbitrary UE, the SCell may not recognize that connection with the UE is deactivated, and thus may continuously perform scheduling for the UE. Since the UE does not perform measurement on the deactivated SCell, there is a problem in that the UE cannot be appropriately scheduled. Hereinafter, a method for overcoming this problem will be described.

First, a PCell may determine to deactivate connection with a SCell according to a measurement report message received from a UE (S1110 and S1120). When a PCID of the SCell to be deactivated and a PCID of the PCell are different, the PCell may transmit a SCell deactivation indicator message to the SCell (S1130). The SCell deactivation indicator message may include "a message type, an ID (PCID, ECGI, or GCID) of the PCell, an ID(PCID, ECGI, and GCID) of the SCell, an ID (C-RNTI or UE X2AP ID) of the UE in the PCell (or SCell), and SCellindex" and so on and may be transmitted through backhaul between the PCell and the SCell. The SCell that receives the SCell deactivation indicator message may recognize that connection with the UE is deactivated and may stop additional UL scheduling for the UE.

When DL/UL data scheduled to the UE is completely transmitted and received, the SCell may transmit a SCell deactivation response message to the PCell (S1140). The SCell deactivation response message may include "a message type, an ID (PCID, ECGI, or GCID) of the PCell, an ID (PCID, ECGI, or GCID) of the SCell, an ID (C-RNTI or UE X2AP ID) of the UE in the PCell (or SCell), and SCellindex" and so on.

Then the PCell that receives the SCell deactivation response message may transmit a MAC control element for a command for deactivating connection with the SCell to the UE (S1150). The UE that receives the MAC control element for a command of deactivation may recognize that connection with the SCell is converted into a deactivation status. The UE may not report CSI of the SCell in a deactivation status and may not monitor a control channel or may not transmit a UL signal.

The PCell may set a time corresponding to a preset time period along with transmission of the SCell deactivation indicator message. Accordingly, when the PCell does not receive a SCell deactivation response message from the SCell even after the timer expires, the PCell may re-transmit a SCell deactivation indicator message to the SCell. In this case, the PCell may pre-define a maximum number of times for repeatedly re-transmitting the SCell deactivation indicator message until the SCell deactivation response message is received from the SCell.

In addition, in order to avoid errors due to a difference between a time point when the SCell is actually deactivated and a time point when the UE recognizes a deactivation time point of the SCell, the PCell may add information associated with the deactivation time point of the SCell to the MAC control element transmitted to the UE and the SCell deactivation indicator message transmitted to the SCell and may transmit the information.

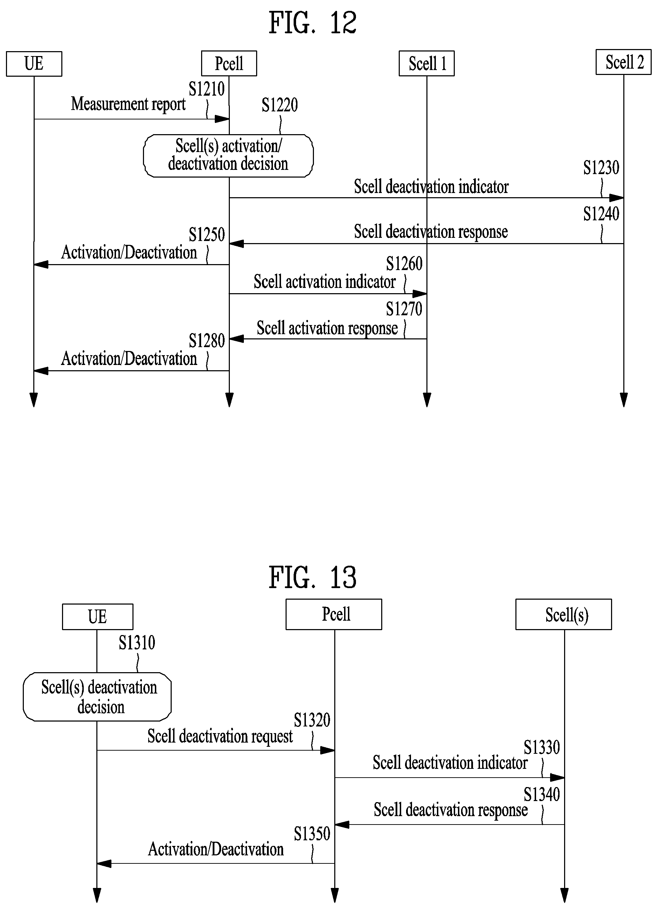

FIG. 12 is a diagram for explanation of a method for managing connection with a SCell according to an embodiment of the present invention. In FIG. 12, repeated descriptions of elements already described in FIG. 11 will not be given here.

In the embodiment illustrated in FIG. 12, a SCell 1 and a SCell 2 are connected to a UE. Connection with the SCell 1 may be deactivated and connection with the SCell 2 may be activated. The PCell may determine a SCell to be activated/deactivated, based on a measurement report message from the UE. In the illustrated embodiment, the PCell may determine to activate the SCell 1 and to deactivate the SCell 2 (S1210 and S1220).

The PCell may transmit a SCell activation/deactivation indicator message to a SCell with a different PCID (Global eNB ID, eNB ID, or ECGI) from a PCID (Global eNB ID, eNB ID, or ECGI) of the PCell among the SCell, an activation/deactivation state of which is to be changed. That is, the PCell may transmit a SCell deactivation indicator message to the SCell 2 (S1230) and the SCell 2 may stop UL scheduling for the UE and transmit a SCell deactivation response message to the PCell (S1240).

Upon receiving the SCell deactivation response message from the SCell 2, the PCell may transmit a MAC control element for a command for changing a connection state with the SCell 2 to a deactivation state to the UE (S1250). The UE may not report CSI information about the SCell 2 to the PCell and may not transmit a UL signal to the SCell 2.

Then the PCell may transmit a SCell activation indicator message for a command for activating connection with the UE to the SCell 1 (S1260). The SCell 1 that receives the SCell activation indicator message may transmit a SCell activation response message to the PCell in response to the SCell activation indicator message and perform UL scheduling on the UE (S1270).

The PCell may transmit a MAC control element for a command for activating connection with the SCell 1 to the UE (S1280). The UE may monitor a control channel from the activated SCell 1 and transmit a UL signal to the SCell 1. In addition, the SCell 1 may perform UL scheduling on the UE.

FIG. 13 is a diagram for explanation of a method for managing connection with a SCell according to an embodiment of the present invention. Compared to FIGs. 11 and 12, FIG. 13 illustrates an embodiment in which a UE determines to deactivate a SCell.

When the UE does not receive data for the UE from a specific SCell for a predetermined time period, the UE may deactivate connection with the SCell connected to the UE and in an activation status in order to reduce power consumption (S1310). Since a PCell manages the configuration and status of the SCell for the UE, the PCell needs to recognize determination of the UE.

Accordingly, the UE may transmit a SCell deactivation request message indicating determination of deactivation of the SCell to the PCell (S1320). The SCell deactivation request message may include "a message type, a Pcell ID (PCID, ECGI, or GCID), SCell ID (PCID, ECGI, or GCID), and SCellindex" and so on and may be transmitted using an RRC signal.

Upon receiving the SCell deactivation request message received from the UE, the PCell may transmit the SCell deactivation indicator message to the SCell indicated by the request message (S1330). The SCell deactivation indicator message may be embodied similarly to the description of FIGs. 11 and 12.

Then the SCell that receives the SCell deactivation indicator message may transmit a SCell deactivation response message indicating that a message is received from the PCell, to the PCell (S1340). After completely transmitting and receiving data scheduled for the UE, the SCell may also transmit the SCell deactivation response message. The SCell deactivation response message may be embodied similarly to the description of FIGs. 11 and 12.

The PCell that receives the SCell deactivation response message from the SCell may transmit a MAC control element for a command for deactivating connection with the SCell, to the UE (S1350). The UE that receives the MAC control element may recognize that connection with the SCell is deactivated, may not transmit a UL signal, and may not report information about the SCell.

Furthermore, in order to avoid errors due to a difference between a time point when the SCell is actually deactivated and a time point when the UE recognizes a deactivation time point of the SCell, the PCell may add information associated with the deactivation time point of the SCell to the MAC control element transmitted to the UE and the SCell deactivation indicator message transmitted to the SCell and may transmit the information.

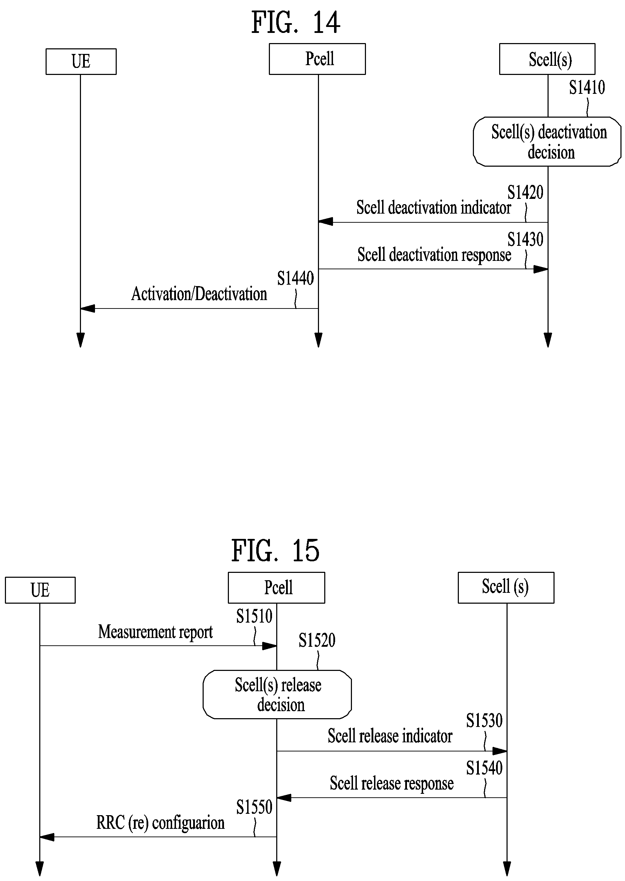

FIG. 14 is a diagram for explanation of a method for managing connection with a SCell according to an embodiment of the present invention. Compared to FIGs. 11, 12, and 13, FIG. 14 illustrates an embodiment in which a SCell itself determines to be deactivated.

When the SCell does not transmit data for a UE for a preset time period, the SCell may determine to deactivate connection with the SCell (S1410). The SCell may deactivate connection between the UE and the SCell to make the UE not to monitor the SCell, thereby reducing power consumption of the UE.

The PCell that manages the configuration and status between the UE and the SCell needs to recognize determination of the SCell. For example, in order to activate connection with the SCell for the UE, the PCell needs to recognize the status of the SCell. Accordingly, the SCell may transmit a SCell deactivation indicator message indicating determination of deactivation of connection with the UE, to the PCell (S1420).

The SCell deactivation indicator message may include "a message type, an ID (PCID, ECGI, or GCID) of the PCell, an ID (PCID, ECGI, or GCID) of the SCell, an ID (C-RNTI or UE X2AP ID) of the UE in the PCell (or SCell), and SCellindex" and so on and may be transmitted through backhaul between the PCell and the SCell. The SCell deactivation indicator message in FIG. 14 may be embodied similarly to the description of FIGs. 11 to 13 except for a target of message transmission/reception.

The PCell that receives the SCell deactivation indicator message from the SCell may transmit a SCell deactivation response message indicating message reception, to the SCell (S1430). Then the PCell may transmit a MAC control element for a command for deactivating connection with the SCell, to the UE (S1440). The UE may recognize deactivation of connection with the SCell according to the MAC control element received from the PCell.

Furthermore, it is necessary to avoid errors due to a difference between a time point when the SCell is actually deactivated and a time point when the UE recognizes a deactivation time point of the SCell. Accordingly, the SCell may add information associated with the deactivation time point of the SCell to the SCell deactivation indicator message and may transmit the information. The PCell may also add information associated with the deactivation time point of the SCell to the MAC control element transmitted to the UE and may transmit the information.

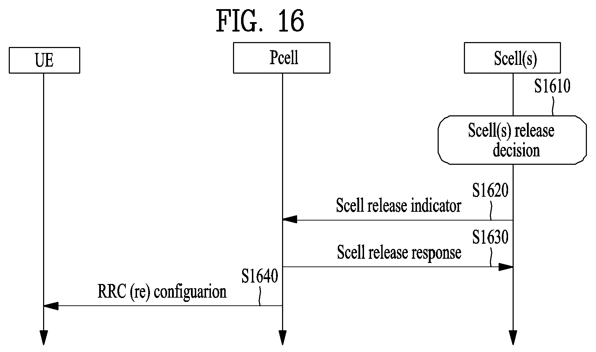

FIG. 15 is a diagram for explanation of a method for managing connection with a SCell according to an embodiment of the present invention. FIG. 15 illustrates an embodiment in which a UE releases connection with a SCell according to determination of a PCell, and FIG. 16 illustrates an embodiment in which a UE releases connection with a SCell according to determination of the SCell.

In the legacy LTE Rel-8/9/10, a PCell may transmit an RRC (re)configuration message to an arbitrary UE to release connection with a specific SCell. For example, when the PCell receives a measurement report message from a UE and a measurement value satisfies a predetermined condition, the PCell may release connection with the SCell (e.g., when intensity of a signal of the SCell is less than a threshold value). Upon receiving a command for releasing connection with the UE, the SCell may convert an activation status into a deactivation status or may directly release the connection in a deactivation status.

With regard to a UE with dual connectivity between a macro cell and a small cell, the PCell and the SCell may be configured in different eNBs, as described above. In this case, when the PCell releases connection with the configured for an arbitrary UE, there is a problem in that the SCell does not recognize that connection with the SCell is released by the PCell and may continuously schedule the UE. Hereinafter, a method for overcoming the problem will be described.

Upon receiving a measurement report message about the SCell from the UE (S1510), when a measurement value satisfies a preset condition, the PCell may determine to release connection between the UE and the SCell (S1520). Release of connection with the SCell may indicate that the SCell does not support dual connectivity of the UE any longer.

When a PCID (Global eNB ID, eNB ID, or ECGI) of a SCell with connection to be released and a PCID (Global eNB ID, eNB ID, or ECGI) of the PCell are different, the PCell may transmit a SCell release indicator message to the SCell (S1530). The SCell release indicator message may include "a message type, an ID (PCID, ECGI, or GCID) of the PCell, an ID (PCID, ECGI, or GCID) of the SCell, an ID (C-RNTI or UE X2AP ID) of the UE in the PCell (or SCell), and SCellindex" and so on.

The SCell that receives the SCell release indicator message may recognize that connection with the UE is released and stop additional UL scheduling for the UE. In addition, the SCell may forward context information about the UE to another SCell or the PCell. Upon completely transmitting and receiving DL/UL data to and from the pre-scheduled UE, the SCell may transmit a SCell release response message to the PCell (S1540). The SCell release response message may include "a message type, an ID(PCID, ECGI, and GCID) of the PCell, an ID (PCID, ECGI, or GCID) of the SCell, an ID (C-RNTI or UE X2AP ID) of the UE in the PCell (or SCell), and SCellindex" and so on.

The PCell may set a timer corresponding to a preset time period along with transmission of the SCell release indicator message. Accordingly, when the PCell does not receive a SCell release response message from the SCell that transmits the SCell release indicator message even after the timer expires, the PCell may re-transmit a SCell release indicator message to the SCell. In this case, the PCell may pre-define a maximum number of times for repeatedly re-transmitting the SCell release indicator message until the SCell release response message is received from the SCell.

Upon receiving the SCell release response message from the SCell, the PCell may transmit a RRC (re)configuration signal to the UE and release connection between the UE and the SCell (S1550). The RRC (re)configuration message may include "a message type, an ID (PCID, ECGI, or GCID) of the SCell, an ID (PCID, ECGI, or GCID) of the PCell, an UL/DL frequency of the SCell, and SCellindex" and so on.

The UE that receives a command for releasing connection with the SCell may recognize that connection with the SCell is released and may detach connection with the SCell. The SCell or the PCell may also transmit a detach request message to the UE.

FIG. 16 is a diagram for explanation of a method for managing connection with a SCell according to an embodiment of the present invention. In FIG. 16, repeated descriptions of elements already described in FIG. 15 will not be given here.

When the activated SCell does not transmit and receive data for the UE for a preset time period, the SCell may determine to release connection with the UE in order to manage resources of the UE and the SCell (S1610). The PCell that manages the configuration and the status between the UE and the SCell needs to recognize this information. For example, since the PCell may activate the SCell, connection of which with the UE is already released, for the UE, the the PCell needs to pre-recognize information associated with release of the SCell.

Accordingly, the SCell may transmit a SCell release indicator message to the PCell (S1620). The SCell release indicator message may be embodied similarly to the description of FIG. 15 but a target of message transmission and reception may be reversed. The PCell that receives the SCell release indicator message from the SCell may transmit the SCell release response message to the SCell (S1630). Then the SCell may stop additional scheduling for the UE and forward context information for the UE.

Upon receiving the SCell release indicator message from the SCell, the PCell may transmit a RRC (re)configuration message to the UE (S1640). The RRC (re)configuration message may include "a message type, an ID (PCID, ECGI, or GCID) of the SCell, an ID (PCID, ECGI, or GCID) of the PCell, a DL/UL frequency of the SCell, and SCellindex" and so on. The UE that receives the RRC (re)configuration message may recognize that connection with the SCell is released and detach connection with the SCell.

### 4. Apparatus structure

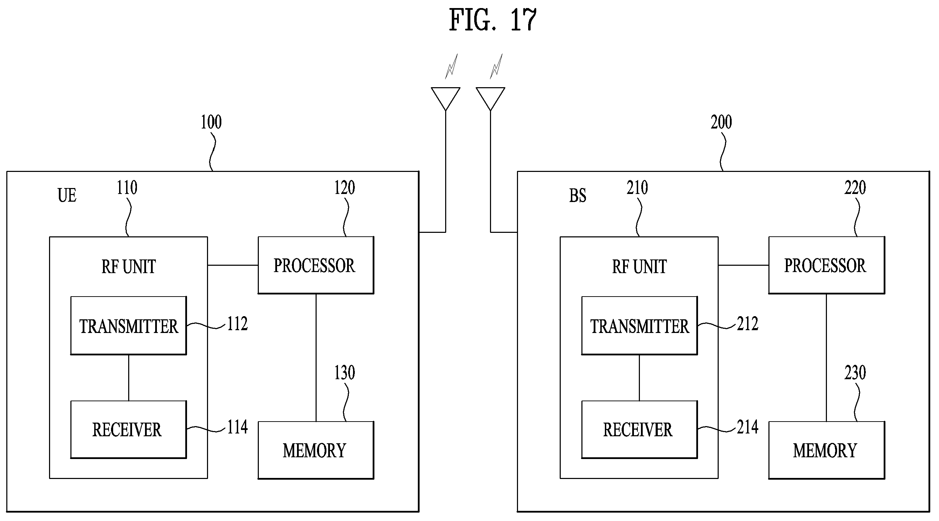

FIG. 17 is a block diagram of a structure of a UE 100 and an eNB 200 according to an embodiment of the present invention.

In FIG. 17, the UE 100 and the eNB 200 may include radio frequency (RF) units 110 and 210, processors 120 and 220, and memories 130 and 230, respectively. Although FIG. 17 illustrates a 1:1 communication environment between the UE 100 and the eNB 200, a communication environment between a plurality of UEs and the eNB 200 can also be established. In addition, the eNB 200 of FIG. 17 can be applied to both a macro cell eNB and a small cell eNB.

The RF units 110 and 210 may include transmitters 112 and 212 and receivers 114 and 214, respectively. The transmitter and 112 and the receiver 114 of the UE 100 may be configured to transmit and receive signals to and from the eNB 200 and other UEs and the processor 120 may be functionally connected to the transmitter 112 and the receiver 114 to control a process of transmitting and receiving signals to and from other devices by the transmitter 112 and the receiver 114. The processor 120 performs various processing processes on signals to be transmitted and then transmits the processed signals to the transmitter 112 and performs processing on the signals received by the receiver 114.

As necessary, the processor 120 may store information contained in exchanged message in the memory 130. Based on this structure, the UE 100 can perform various methods according to the aforementioned embodiments of the present invention.

The transmitter 212 and the receiver 214 of the eNB 200 may be configured to transmit and receive signals to and from other eNBs and UEs and the processor 220 may be functionally connected to the transmitter 212 and the receiver 214 to control a process of transmitting and receiving signals to and from other devices by the transmitter 212 and the receiver 214. The processor 220 performs various processing processes on signals to be transmitted and then transmits the processed signals to the transmitter 212 and performs processing on the signals received by the receiver 214. As necessary, the processor 220 may store information contained in exchanged message in the memory 230. Based on this structure, the eNB 200 can perform various methods according to the aforementioned embodiments of the present invention.

The processors 120 and 220 of the UE 100 and the eNB 200 requests (e.g., controls, manipulates, manages, etc.) operations of the UE 100 and the eNB 200, respectively. The processors 120 and 220 may be connected to the memories 130 and 230 for storing program codes and data, respectively. The memories 130 and 230 may be connected to the processors 120 and 220 to stores operating system (OS), an application, and general files.

The processors 120 and 220 according to the present invention can also be called a controller, a microcontroller, a microprocessor, a microcomputer, etc. The processors 120 and 220 may be embodied in the form of hardware, firmware, software, or a combination thereof. When an embodiment of the present invention is embodied using hardware, the processors 120 and 220 may include application specific integrated circuits (ASICs), digital signal processors (DSPs), digital signal processing devices (DSPDs), programmable logic devices (PLDs), field programmable gate arrays (FPGAs), or the like which is configured to embody the present invention.

The embodiments of the present invention may be written as computer programs and can be implemented in general-use digital computers that execute the programs using a computer readable recording medium. In addition, a structure of data used in the above-described method may be recorded in a computer readable recording medium through various methods. Program storage devices used for description of a storage device containing an executable computer code for execution of the various methods according to the present invention is not understood as temporary objects such as carrier waves or signals. Examples of the computer readable recording medium include magnetic storage media (e.g., ROMs, floppy disks, hard disks, etc.) and optical recording media (e.g., CD-ROMs, or DVDs).

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### [Industrial Applicability]

The aforementioned embodiments of the present invention can be applied various mobile communication systems.

## Claims

1. A method for managing connection between a macro cell and a small cell of a user equipment (UE) with dual connectivity in a heterogeneous cell deployment in which the macro cell and the small cell coexist, the method comprising:
receiving a first measurement report message about the small cell connected to the UE, from the UE;
determining to activate connection with the small cell based on the first measurement report message;
when the small cell has a different cell ID from a cell ID of the macro cell, transmitting a SCell activation indicator message for a command for activating connection with the UE, to the small cell;
receiving a SCell activation response message for a command for scheduling the UE, from the small cell; and
commanding the UE to activate connection with the small cell.

2. The method according to claim 1, further comprising:
prior to the receiving of the first measurement report message from the UE, determining to add connection with the small cell to the UE based on a second measurement report message about the small cell, received from the UE;
transmitting a dual connectivity information message comprising information about connection with the UE to the small cell; and
upon receiving a dual connectivity response message for admitting that the UE is to be supported, from the small cell, transmitting a radio resource control (RRC) configuration message for a command for connection with the small cell to the UE.

3. The method according to claim 1, further comprising:
after activating connection with the small cell, determining to deactivate connection with the small cell based on a third measurement report message about the activated small cell from the UE;
transmitting a SCell deactivation indicator message for a command for deactivating connection with the UE to the small cell; and
commanding the UE to deactivate connection with the small cell according to a SCell deactivation indicator message received from the small cell.

4. The method according to claim 3, further comprising, after deactivating connection with the small cell, activating connection between the UE and another small cell connected to the UE.

5. The method according to claim 1, further comprising:
after activating connection with the small cell, determining to release connection with the small cell based on a fourth measurement report message about the activated small cell from the UE;
transmitting a SCell release indicator message for a command of stopping scheduling for the UE to the small cell; and
transmitting an RRC configuration message for a command for releasing connection with the small cell to the UE according to a SCell release response message received from the small cell.

6. The method according to claim 1, wherein the transmitting and the receiving further comprises re-transmitting the SCell activation indicator message at predetermined intervals until a predetermined maximum transmission number of times is reached or the SCell activation response message is received from the small cell when the SCell activation response message is not received from the small cell for a predetermined time period.

7. The method according to claim 1, wherein:
the commanding comprises transmitting a media access control (MAC) control element to the UE; and
the SCell activation indicator message and the MAC control element comprise information about a time point for activation of the small cell.

8. A macro cell base station (BS) for managing connection with a small cell of a user equipment (UE) with dual connectivity in a heterogeneous cell deployment in which a macro cell and a small cell coexist, the BS comprising:
a transmitter;
a receiver; and
a processor connected to the transmitter and the receiver and for managing connection with the small cell of the UE,
wherein:
the processor is configured to control the receiver to receive a first measurement report message about the small cell connected to the UE, from the UE, to determine to activate connection with the small cell based on the first measurement report message, to control the transmitter to transmit a SCell activation indicator message for a command for activating connection with the UE, to the small cell when the small cell has a different cell ID from a cell ID of the macro cell, to control the receiver to receive a SCell activation response message for a command for scheduling the UE, from the small cell, and to command the UE to activate connection with the small cell.

9. The BS according to claim 8, wherein, prior to the receiving of the first measurement report message from the UE, the processor determines to add connection with the small cell to the UE based on a second measurement report message about the small cell, received from the UE, controls the transmitter to transmit a dual connectivity information message comprising information about connection with the UE to the small cell, and, upon receiving a dual connectivity response message for admitting that the UE is to be supported, from the small cell, controls the transmitter to transmit a radio resource control (RRC) configuration message for a command for connection with the small cell to the UE.

10. The BS according to claim 8, wherein, after activating connection with the small cell, the processor determines to deactivate connection with the small cell based on a third measurement report message about the activated small cell from the UE, controls the transmitter to transmit a SCell deactivation indicator message for a command for deactivating connection with the UE to the small cell, and command the UE to deactivate connection with the small cell according to a SCell deactivation indicator message received from the small cell.

11. The BS according to claim 10, wherein, after deactivating connection with the small cell, the processor activates connection between the UE and another small cell connected to the UE.

12. The BS according to claim 8, wherein, after activating connection with the small cell, the processor determines to release connection with the small cell based on a fourth measurement report message about the activated small cell from the UE, controls the transmitter to transmit a SCell release indicator message for a command of stopping scheduling for the UE to the small cell, and controls the transmitter to transmit an RRC configuration message for a command for releasing connection with the small cell to the UE according to a SCell release response message received from the small cell.

13. The BS according to claim 8, wherein the processor re-transmits the SCell activation indicator message at predetermined intervals until a predetermined maximum transmission number of times is reached or the SCell activation response message is received from the small cell when the SCell activation response message is not received from the small cell for a predetermined time period.

14. The BS according to claim 8, wherein:
the processor controls the transmitter to transmit a media access control (MAC) control element to the UE; and
the SCell activation indicator message and the MAC control element comprise information about a time point for activation of the small cell.
